Europäisches Patentamt

European Patent Office

Office européen des brevets

(11) Veröffentlichungsnummer: **0 240 968 B1**

## (12) EUROPÄISCHE PATENTSCHRIFT

(45) Veröffentlichungstag der Patentschrift: **25.11.92**

(21) Anmeldenummer: **87105050.6**

(22) Anmeldetag: **04.04.87**

(51) Int. Cl.⁵: **E04F 21/00**, B23P 19/04

(54) **Vorrichtung zum maschinellen Eindrücken von Dichtungen.**

(30) Priorität: **04.04.86 DE 3611286**

(43) Veröffentlichungstag der Anmeldung:
**14.10.87 Patentblatt 87/42**

(45) Bekanntmachung des Hinweises auf die
Patenterteilung:
**25.11.92 Patentblatt 92/48**

(84) Benannte Vertragsstaaten:
**AT DE ES FR GB IT SE**

(56) Entgegenhaltungen:
**EP-A- 0 110 156**
**DE-A- 2 915 282**
**FR-A- 2 520 793**
**FR-A- 2 572 123**
**US-A- 4 620 354**

(73) Patentinhaber: **Knaust, Klaus**
**Industriestrasse 8**
**W-8751 Niederlauer(DE)**

(72) Erfinder: **Knaust, Klaus**
**Industriestrasse 8**
**W-8751 Niederlauer(DE)**

(74) Vertreter: **Pöhner, Wilfried Anton, Dr.**
**Kaiserstrasse 27 Postfach 63 23**
**W-8700 Würzburg 1(DE)**

EP 0 240 968 B1

## Beschreibung

Die Erfindung betrifft eine Vorrichtung zum maschinellen Eindrücken von Dichtungen in Flügel und Rahmen von Fenstern, die mit später die Dichtung aufnehmenden Nuten versehen sind, bestehend aus einem den Rahmen oder Flügel aufnehmenden Ständer und einem Eindrückwerkzeug für die Dichtungen sowie einer Schneidevorrichtung, die auf einem Schlitten befestigt sind.

Noch vor einigen Jahren wurden die Dichtungen insbesondere bei Rahmen und Flügeln von Fenstern zunächst zurecht geschnitten und dann per Hand in die entsprechenden Nuten eingedrückt. In jüngster Zeit werden hierfür Maschinen eingesetzt, die mit einem in einer Richtung bewegbaren Eindrückwerkzeug ausgerüstet sind und die den Dichtungsstreifen, abziehend von einer Vorratsrolle, in die Nut einführen und dort festlegen und mit Erreichen des Eckpunktes die Dichtung abschneiden. Daraufhin wird der Rahmen oder Flügel als Ganzes um 90 Grad geschwenkt und die Dichtung in eine senkrecht zur bisherigen Ebene verlaufende Nut eingebracht. Entscheidend ist, daß das Eindrückwerkzeug stets entlang einer raumfesten Geraden eine Bewegung ausführt und daß für das allseitige Einziehen in Rahmen oder Flügel diese im Ständer in der durch sie aufgespannten Ebene mit Erreichen eines Eckpunktes gedreht werden. Vorrichtungen dieser Art sind aus der EP - A - 0 110156 bekannt. Dies ist in mehrfacher Hinsicht als wesentlicher Nachteil anzusehen, da zum einen das Drehen durch das hohe Gewicht der Teile entsprechende apparative Maßnahmen erfordert und zum anderen hierdurch eine entscheidende Verlängerung der benötigten Arbeitszeit eintritt.

Aus der DE-A- 2845475 ist die Verwendung einer in einer Ebene bewegbaren Fülldüse bekannt, die dem Einbringen der Füllmasse in die Randfuge einer Isolierglasscheibe dient. Dabei ist die Fülldüse nach Art eines zweidimensionalen kartesischen Koordinantensystems in der X- und Y-Richtung verschiebbar.

Hiervon ausgehend hat sich die Erfindung die Weiterentwicklung derartiger Vorrichtungen dahingehend zur Aufgabe gemacht, daß eine wesentliche Beschleunigung des Arbeitstaktes und Verbesserung der Produktqualität erreichbar wird.

Gelöst wird diese Aufgabe erfindungsgemäß durch die Merkmale im Kennzeichen des Anspruchs 1.

Eine derartige Ausgestaltung der Eindrückvorrichtung erlaubt den Flügel oder Rahmen, der in üblicher Weise mit einem Transportband auf den Ständer gebracht wird, dort festzulegen und die Dichtung in einem einzigen kontinuierlichen Arbeitsvorgang um eine Ecke herumzuführen. Ist das Eindrückwerkzeug beispielsweise um 360 Grad verschwenkbar, läßt sich die zusammenhängende Dichtung um sämtliche Ecken herumlegen, so daß ein in sich geschlossener Dichtungsverlauf entsteht. Es ist dann nicht mehr notwendig, daß in den Eckpunkten, wie im Stande der Technik erforderlich, die Dichtung auf Gehrung geschnitten werden muß, sondern daß sie in den Ecken umlaufend und in einem einzigen Arbeitsvorgang eingelegt werden kann. Hierbei ist im Rahmen der Erfindung grundsätzlich unerheblich, auf welche Art und Weise die konkrete Ausbildung der Drehbarkeit der Eindrückwerkzeuge, Schneidevorrichtungen udgl. erfolgt. Daneben spielt es auch keine Rolle, aus welchem Material Rahmen oder Flügel bestehen, insbesondere ob sie aus Kunststoff, aus Metall oder aus Holz aufgebaut sind. Die Bewegung des Eindrückwerkzeuges ist im Bereich des Eckpunktes so gesteuert, daß es mit Erreichen desselben um eine Dichtungsstärke zurückfährt, dann um 90 Grad verschwenkt und an demselben Punkt wieder eindrückt und anschließend das Einziehen der Dichtung in der anderen Koordinate vorgenommen wird. Diese Bewegung des eindrückwerkzeuges im Bereich des Eckpunktes ergibt ein präzises Eindrükken der Dichtung in diesem Bereich.

Die mit Einsatz der erfindungsgemäßen Vorrichtung erreichbaren Vorteile sind vielfältig:
Da, wie bereits erwähnt, Rahmen oder Flügel raumfest bleiben und während des Eindrückvorganges der Dichtungen einzig und allein das Eindrückwerkzeug bewegt wird, erübrigt sich ein Drehen des Rahmens selbst, was einerseits eine erhebliche bauliche Vereinfachung und damit Verbilligung der Herstellung mit sich bringt und eine wesentliche Beschleunigung des Arbeitsvorganges bedeutet. Da gemäß der vorstehenden Schilderungen die Dichtung in den Ekken durchgehend verläuft, erübrigt sich das Schneiden in den Ecken auf Gehrung, wodurch zusätzliche Arbeitszeit eingespart wird. Dies ist auch unter dem Gesichtspunkt als Vorteil anzusehen, da die elastischen Dichtungen beim Schneiden grundsätzlich gequetscht werden, so daß keine gerade Schnittfläche entsteht und/oder komplizierte Schnittechniken angewendet werden müßten, um den Gehrungsschnitt zu erzeugen.
Bei einer umlaufenden Dichtung entfallen diese Probleme. Ebenso wie die bereits seit kurzem auf dem Markt befindlichen Vorrichtung ermöglicht die Erfindung ein maschinelles Arbeiten, so daß sich Handarbeit erübrigt, worin ebenfalls ein erheblicher Vorzug zu sehen ist.

In einer weiteren Ausgestaltung ist vorgesehen den in einer Ebene verschieblichen Schlitten mit mehreren Eindrückwerkzeugen auszustatten, um bei höherwertigen d. h. mit mehreren parallel verlaufenden Dichtungen versehenen Fenstern diese gleichzeitig und in einem einzigen Arbeitsvorgang einbringen und einlegen zu können.

Im Stande der Technik ist es bislang üblich, die Bewegung des Eindrückwerkzeuges dadurch zu steuern, daß es mit Erreichen des Eckpunktes und Betätigen über Endschalter oder Lichtschranken den Eindrückvorgang beendet und die Dichtung abschneidet. Das Meßen der jeweiligen Koordinate von Flügel oder Rahmen erfolgt dann gleichzeitig mit dem Eindrücken der Dichtung. Demgegenüber werden in einer bevorzugten Ausgestaltung sämtliche Abmessungen von Fenster oder Flügel vorher auf eine der üblichen Weisen festgestellt, die gesamte Länge der Dichtung bestimmt und dann erst mit dem Eindrückvorgang begonnen. Gleichzeitig wird entsprechend den erhaltenen Abmessungen die Bewegung des Eindrückwerkzeuges gesteuert, so daß nicht nur wie im Stande der Technik Rahmen und Flügel sondern ohne weiteres auch Kämpfer in beliebiger Höhe mit einer Dichtung versehen werden können.

In der Praxis stellt man fest, daß durch das Abziehen von einer Vorratsrolle die Dichtungen gelängt sind, so daß bei deren Bemessung die Länge größer als die entsprechende geometrische Ausdehnung der aufzunehmenden Nut gewählt werden muß, da nach dem Eindrücken die Dichtung in ihren Normalzustand zurückkehrt und dadurch verkürzt. Dies läßt sich durch entsprechende Berücksichtigung und Einstellung beim Abtrennen der Dichtungen korrigieren und ausgleichen. Andernfalls würden sich in der eingezogenen Dichtung Lücken ergeben. Auch erweist es sich hier als Vorteil, daß die Dichtung in den Eckpunkten nicht getrennt ist sondern umläuft, so daß ein Längenausgleich auch "über Eck" ohne weiteres möglich ist. Durch eine kontrollierte Zugabe zur Länge der mit der Dichtung auszufüllenden Nut läßt sich die durch das Abziehen vorhandene Spannung und die hierdurch später bedingte Verkürzung ausgleichen.

Das Abmessen von Flügel, Rahmen odgl. erfolgt in der üblichen Weise, beispielsweise auf optischen Wegen mit Hilfe von Fotozellen oder mit Ultraschall in an sich bekannter Weise.

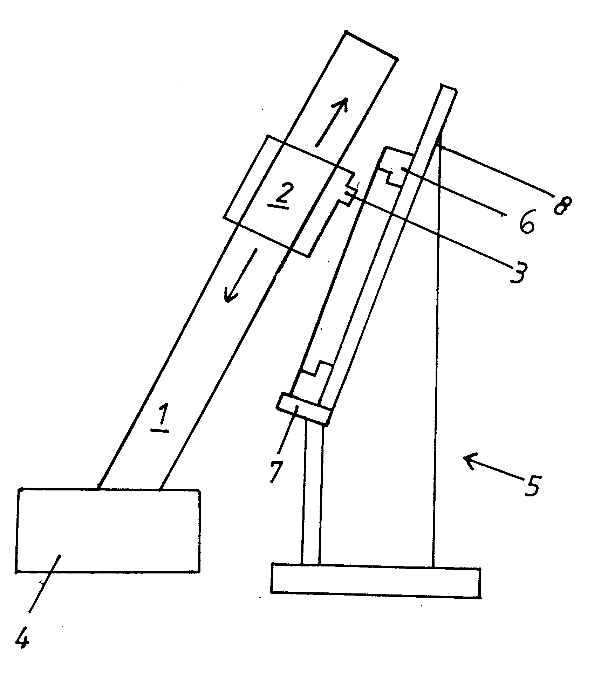

Weitere Einzelheiten, Merkmale und Vorteile der Erfindung lassen sich dem nachfolgenden Beschreibungsteil entnehmen, in dem an Hand der Zeichnung ein Ausführungsbeispiel der Erfindung näher erläutert wird. Es zeigt in schematischer Darstellung eine Seitenansicht der erfindungsgemäßen Vorrichtung zum maschinellen Eindrücken von Dichtungen in Flügel und Rahmen von Fenstern.

Auf einer in einem geringen Winkel gegen die Vertikale geneigten Schiene 1 ist ein Schlitten 2 verschieblich angebracht, an dessen nach außen weisender Stirnseite ein Eindrückwerkzeug 3 befestigt ist. Die im wesentlichen in vertikaler Richtung verlaufende Schiene 1 ist ihrerseits verfahrbar auf einer senkrechten hierzu und damit senkrecht zur Zeichenebene angeordneten horizontalen Schiene 4 befestigt. Durch Zusammenwirken der beiden im wesentlichen senkrecht zueinander verlaufenden Schienen 1, 4 wird es möglich, das Eindrückwerkzeug 3 in einer hierdurch aufgespannten Ebene in jede beliebige Position zu verfahren.

Parallel zu dieser durch die möglichen Bewegungen des Schlittens definierten Ebene ist auf einem Ständer 5 der Rahmen 6 eines Fensters befestigt, der seinerseits über ein Transportband 7 auf den Ständer 5 gebracht und wieder heruntergenommen werden kann. Der Rahmen 6 ist hierbei abgestützt an eine Rückwand 8, die dann ebenfalls parallel zu der durch die Bewegung des Eindrückwerkzeugs 3 definierten Ebene verläuft.

Neben der Möglichkeit der Bewegung des Schlittens 2 mit dem daran befestigten Eindrückwerkzeug in einer Ebene ist für die Erfindung darüber hinaus entscheidend, daß das Eindrückwerkzeug 3 selbst verschwenkbar ist und deshalb in einer einzigen durchgehenden Bewegung umlaufend die Dichtung in den Rahmen 6 eingedrückt werden kann, der im Gegensatz zum Stande der Technik hierbei raumfest bleibt. Wie einerseits die Verschiebung des Schlittens 2 auf den Schienen 1, 4 und andererseits die Schwenkbewegung des Eindrückwerkzeuges 3 konkret realisiert werden, steht im Rahmen der Erfindung grundsätzlich frei, weshalb in der Zeichnung hierauf nicht eingegangen wurde. Denkbare Realisierungen bestehen in der Verwendung von Elektromotoren, hydraulischen Antrieben u. a. Weiterhin sind die grundsätzlich erforderliche Vorratsrolle für die Dichtungen, sowie Vorrichtungen zum Abrollen und Schneiden aus Gründen der Übersichtlichkeit nicht wiedergegeben und betreffen darüber hinaus den Kern der Erfindung nicht, können aber ohne weiteres und ohne nähere Angaben durch einen Fachmann konstruiert und gebaut werden.

Ebenfalls nicht eingezeichnet sind weitere mögliche Vorrichtungselemente zur Abmessung von Rahmen oder Flügel auf optischem Wege oder mit Hilfe von Ultraschall. Die dabei erhaltenen Meßwerte dienen als Eingangssignale für eine Steuereinrichtung zur Bewegung des Eindrückwerkzeuges. Unabhängig von einer derartigen Meßvorrichtung könnte beim Arbeiten an einer größeren Anzahl Rahmen oder Flügel gleicher Größe die Steuerung über eine Programmierung einmalig eingestellt werden, so daß ein individuelles Erfassen der Abmessung weder notwendig ist noch als sinnvoll erscheint.

Die vorgeschlagene Vorrichtung erlaubt ein wesentlich rascheres, maschinelles Eindrücken von Dichtungen in Flügel und Rahmen von Fenstern.

**Patentansprüche**

1. Vorrichtung zum maschinellen Eindrücken von Dichtungen in Flügel und Rahmen (6) von Fenstern, die mit später die Dichtung aufnehmenden Nuten versehen sind, bestehend aus einem den Rahmen oder Flügel aufnehmenden Ständer und einem Eindrückwerkzeug (3) für die Dichtungen sowie einer Schneidevorrichtung, die auf einem Schlitten befestigt sind, **dadurch gekennzeichnet,** daß der Schlitten (2) in einer im wesentlichen parallel zu durch Rahmen (6) oder Flügel definierten Ebene bewegbar ist, in der das Eindrückwerkzeug (3) mindestens um 90 Grad verschwenkbar ist und daß Mittel vorgesehen sind, die mit Erreichen des Eckpunktes das Eindrückwerkzeug (3) um eine Dichtungsstärke zurückfahren, dann um 90 Grad schwenken und an demselben Punkt die Dichtung wieder eindrücken und anschließend das Eindrücken der Dichtung in der anderen Koordinate bewirken.

2. Vorrichtung nach Anspruch 1, **gekennzeichnet durch** mehrere Eindrückwerkzeuge (3).

3. Vorrichtung nach einem der Ansprüche 1 und 2, **dadurch gekennzeichnet,** daß die Vorrichtung vor dem Eindrücken die Abmessungen von Rahmen 6 oder Flügel erfaßt und die Schneidevorrichtung die Länge entsprechend abtrennt sowie die Bewegung des Eindrückwerkzeuges entsprechend steuert.

4. Vorrichtung nach Anspruch 3, **dadurch gekennzeichnet,** daß die Dichtung länger als die geometrische Ausdehnung der aufzunehmenden Nut ist.

5. Vorrichtung nach Anspruch 3 oder 4, **dadurch gekennzeichnet,** daß das Abmessen optisch mit Hilfe von Fotozellen oder mit Ultraschall erfolgt.

## Claims

1. Device for the mechanical insertion of seals into window sashes and frames (6), which are provided with grooves for subsequently receiving said seal, consisting of a stand to receive said frame or sash, and an insertion tool (3) for the seals as well as a cutting device, which are fixed to a saddle **wherein** said saddle (2) is movable in a plane essentially parallel to that defined by said frame (6) or sash, in which said insertion tool (3) can be swivelled through at least 90 degrees and that means are provided which, whereupon reaching a corner point, return said insertion tool (3) backwards the thickness of the seal, then swivel it through 90 degrees and at the same point again press in said seal and subsequently effect the insertion of said seal at different coordinates.

2. Device according to claim 1 **wherein** said device comprises a multiplicity of insertion tools (3).

3. Device according to one of claims 1 and 2 **wherein** said device registers the dimensions of said frame (6) or sash before inserting the seal and said cutting device cuts off the length accordingly as well as correspondingly controlling the movement of said insertion device.

4. Device according to claim 3 **wherein** said seal is longer than the geometric extension of the groove that receives it.

5. Device according to claim 3 or 4 **wherein** the dimensioning is done optically by means of photo-cells or ultrasonics.

## Revendications

1. Dispositif pour le sertissage en machine de garnitures d'étanchéité dans des vantaux et cadres (6) de fenêtres, équipés de rainures destinées à recevoir ultérieurement la garniture d'étanchéité, consistant d'un support recevant le cadre ou le vantail et d'un outil de sertissage (3) pour les garnitures d'étanchéité ainsi que d'un dispositif de coupe monté sur un coulisseau, **caractérisé en ce que** le coulisseau (2) est mobile dans un plan essentiellement parallèle au plan défini par le cadre (6) ou le vantail, dans lequel l'outil de sertissage (3) est pivotant au moins de 90 degrés et que des moyens sont prévus qui, lorsque le point d'angle est atteint, reculent l'outil de sertissage (3) d'une épaisseur de garniture d'étanchéité, puis le font pivoter de 90 degrés et enfoncent à nouveau la garniture d'étanchéité au même point et pratiquent ensuite le sertissage de la garniture d'étanchéité suivant l'autre coordonnée.

2. Dispositif selon revendication 1, **caractérisé par** plusieurs outils de sertissage (3.)

3. Dispositif selon l'une des revendications 1 et 2, **caractérisé en ce que** le dispositif saisit les dimensions du cadre 6 ou du vantail avant le sertissage et que le dispositif de coupe sépare la longueur correspondante et contrôle le mouvement de l'outil de sertissage de façon appropriée.

4. Dispositif selon la revendication 3, **caractérisé en ce que** la garniture d'étanchéité est plus longue que l'extension géométrique de la rainure correspondante.

5. Dispositif selon la revendication 3 ou 4, **caractérisé en ce que** la mesure est effectuée de manière optique à l'aide de cellules photoélectriques ou au moyen d'ultra-sons.

EP 0 240 968 B1